# EUROPEAN PATENT APPLICATION

(11) **EP 2 509 236 A1**
(43) Date of publication of application: **10.10.2012**
(21) Application number: 10840476.5
(22) Date of filing: 06.12.2010
(51) Int. Cl.: H04B 10/00

(54) **MICROWAVE ACCESS METHOD AND MULTI-SERVICE TRANSPORT APPARATUS**

(30) Priority: 31.12.2009 CN 200910260759
(71) Applicant: Huawei Technologies Co., Ltd., Guangdong 518129 (CN)
(72) Inventor: LI, Kun, Shenzhen Guangdong 518129 (CN); ZHOU, Jianlin, Shenzhen Guangdong 518129 (CN); HU, Xing, Shenzhen Guangdong 518129 (CN)
(74) Representative: Maiwald Patentanwalts GmbH
(86) International application number: PCT/CN2010/079450
(87) International publication number: WO 2011/079687

(57) **Abstract**

The present invention discloses a microwave access method and a multi-service transport device. The present invention relates to the communication technology and improves availability of microwave transport. The present invention includes: detecting whether a performance parameter and/or a status parameter of a microwave air interface changes; if the performance parameter and/or the status parameter of the microwave air interface changes, generating a dynamic bandwidth request according to the changed performance parameter and/or the changed status parameter, and sending the dynamic bandwidth request to a main control unit of a multi-service transport network; receiving dynamic bandwidth allocation information sent by the main control unit according to the dynamic bandwidth request; and receiving an uplink microwave signal transmitted by the microwave air interface, performing uplink service processing on the uplink microwave signal to obtain uplink service data, and transporting the uplink service data to the multi-service transport network according to the dynamic bandwidth allocation information. The present invention is applicable to the process of microwave access to the multi-service transport network.

## Description

This application claims priority to Chinese Patent Application No. 200910260759.2, filed with the Chinese Patent Office on December 31, 2009 and entitled "MICROWAVE ACCESS METHOD AND MULTI-SERVICE TRASNPORT DEVICE", which is incorporated herein by reference in its entirety.

### FIELD OF THE INVENTION

The present invention relates to the communications field, and in particular, to a microwave access method and a multi-service transport device.

### BACKGROUND OF THE INVENTION

Microwave transporting does not require optical fiber or cable and directly transports data in air; therefore, microwave transporting has advantages in terms of the engineering in cities, remote areas, or special areas. Moreover, due to flexible and convenient networking and usage, short service provision time, and development of the microwave technology, the cost of microwave devices are greatly reduced, facilitating wide use of microwave devices.

Featuring less network layer divisions, simple intermediate processing, and uniform management and transmission on multiple types of service data, a multi-service transport network that emerges recently plays an increasing important role in service transport. How to combine microwave transporting and the multi-service transport network to take their advantages becomes the concern of the industry. Currently, a microwave device and a GTH (GEM-based Transport Hierarchy, GEM-based transport hierarchy) device are independent devices. Service transmission between the two devices uses service landing connection; that is, a time division multiplexing (TDM) service is obtained by parsing a microwave frame of the microwave device. Then, the TDM service is encapsulated to a service format (ETH packet) matching a service interface (for example, an Eth interface for the Ethernet service) of a multi-service transport network device, and transmitted to the multi-service transport network device. The multi-service transport network device decapsulates the original TDM service from the ETH packet, and sends the TDM service to another module for processing. A reverse processing is performed on a service transmitted from the multi-service transport network device to the microwave device. The preceding process in which the TDM service is decapsulated and encapsulated again is called "service landing".

In the process of implementing the preceding communications between the microwave device and the multi-service transport device, the inventor finds the prior art has at least the following problems: The communications between the microwave device and the multi-service transport device uses landing connection, and therefore, the multi-service transport device cannot allocate in real time transport bandwidth used by a microwave air interface in the multi-service transport network to the microwave air interface according to bandwidth required by a service transmitted by the microwave air interface. This reduces the usage of bandwidth of the multi-service transport network to a certain degree and availability of microwave transporting.

### SUMMARY OF THE INVENTION

Embodiments of the present invention provide a microwave access method, including:
detecting whether a performance parameter and/or a status parameter of a microwave air interface changes; if the performance parameter and/or the status parameter changes, generating a dynamic bandwidth request according to the changed performance parameter and/or the changed status parameter, and sending the dynamic bandwidth request to a main control unit of a multi-service transport network, in which the dynamic bandwidth request includes bandwidth requirement information for the microwave air interface to transmit a service;
receiving dynamic bandwidth allocation information sent by the main control unit according to the dynamic bandwidth request, in which the dynamic bandwidth allocation information includes information about transport bandwidth occupied by the microwave air interface in the multi-service transport network; and
receiving an uplink microwave signal transmitted by the microwave air interface, performing uplink service processing on the uplink microwave signal to obtain uplink service data, and transporting the uplink service data to the multi-service transport network according to the dynamic bandwidth allocation information.

Embodiments of the present invention also provide a multi-service transport device, including:
a detecting unit, configured to detect whether a performance parameter and/or a status parameter of a microwave air interface changes;
a bandwidth requesting unit, configured to generate a dynamic bandwidth request according to the changed performance parameter and/or the changed status parameter, and send the dynamic bandwidth request to a main control unit of a multi-service transport network, in which the dynamic bandwidth request includes bandwidth requirement information for the microwave air interface to transmit a service; and further configured to receive dynamic bandwidth allocation information sent by the main control unit of the multi-service transport network according to the dynamic bandwidth request, in which the dynamic bandwidth allocation information includes information about transport bandwidth occupied by the microwave air interface in the multi-service transport network; and
a microwave tributary unit, configured to receive an uplink microwave signal transmitted by the microwave air interface, perform uplink service processing on the uplink microwave signal to obtain uplink service data, and transport the uplink service data to the multi-service transport network according to the dynamic bandwidth allocation information.

In the technical solutions of the present invention, the microwave tributary unit for processing the uplink data transmitted by the microwave air interface is added to the multi-service transport device. When the change on the performance parameter and/or the status parameter of the microwave air interface is detected, the dynamic bandwidth request is generated according to the changed performance parameter and/or the changed status parameter, and the dynamic bandwidth request is sent to the main control unit of the multi-service transport network. The main control unit of the multi-service transport network sends the dynamic bandwidth allocation information according to the dynamic bandwidth request, in which the dynamic bandwidth allocation information includes the information about the transport bandwidth used by the microwave air interface in the multi-service transport network. The microwave tributary unit performs uplink service processing on the uplink microwave signal to obtain the uplink service data, and sends the uplink service data to the multi-service transport network according to the dynamic bandwidth allocation information. This implements real-time change of the information about the transport bandwidth occupied by the microwave air interface in the multi-service transport network according to the volume of services transmitted by the microwave air interface, improves usage of bandwidth of the multi-service transport network to a certain degree, and improves availability of microwave transmission.

### BRIEF DESCRIPTION OF THE DRAWINGS

To describe the embodiments of the present invention or the technical solutions of the prior art more clearly, the following provides brief description of the drawings in the embodiments or the prior art. The following drawings involve only certain embodiments of the present invention. It is apparent that those skilled in the art can obtain other drawings according to these drawings without making any creation.
FIG. 1 is a flow chart of a microwave access method according to Embodiment 1 of the present invention;
FIG. 2 is a composition block diagram of a multi-service transport device according to Embodiment 1 of the present invention;
FIG. 3 is a composition block diagram of another multi-service transport device according to Embodiment 1 of the present invention;
FIG. 4 is an inside composition schematic diagram of a multi-service transport device according to Embodiment 2 of the present invention;
FIG. 5 is a composition diagram of a microwave tributary unit according to Embodiment 2 of the present invention; and
FIG. 6 is a composition diagram of another microwave tributary unit according to Embodiment 2 of the present invention.

### DETAILED DESCRIPTION OF THE EMBODIMENTS

The technical solutions provided in the embodiments of the present invention are described clearly below with reference to the accompanying drawings of the present invention. It is apparent that the following embodiments are only a part of the embodiments of the present invention. All the other embodiments obtained by those skilled in the art without making creation based on the embodiments of the present invention fall within the protection scope of the present invention.

To make the objectives, technical solutions, and advantages of the present invention clearer, the following describes the embodiments of the present invention in detail in conjunction with the accompanying drawings.

### Embodiment 1

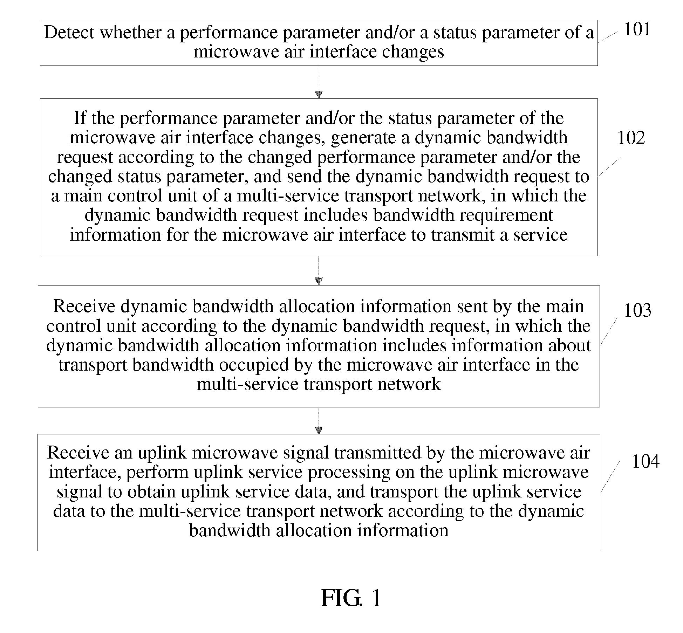

An embodiment of the present invention provides a microwave access method, as shown in FIG. 1. The method includes:
101. Detect whether a performance parameter and/or a status parameter of a microwave air interface changes.

A functional module for processing microwave data transmitted by the microwave air interface, that is, a microwave tributary unit, is added to a multi-service transport device (GTH), and may communicate with other functional modules of the multi-service transport device. The microwave air interface is a microwave physical link for transmitting microwave data. The performance parameter may be but not limited to a signal-to-noise ratio, a packet loss ratio, a bit error rate, and an MSE (Mean Square Error, mean square error); the status parameter may be but not limited to transmit power, receive power, a modulation/demodulation mode, a service type, and a service data volume.

102. If the performance parameter and/or the status parameter of the microwave air interface changes, generate a dynamic bandwidth request according to the changed performance parameter and/or the changed status parameter, send the dynamic bandwidth request to a main control unit of a multi-service transport network, in which the dynamic bandwidth request includes bandwidth requirement information for the microwave air interface to transmit a service.

Generating the dynamic bandwidth request according to the changed performance parameter and/or the changed status parameter and sending the dynamic bandwidth request to the main control unit of the multi-service transport network enable the main control unit of the multi-service transport network to allocate transport bandwidth occupied by the microwave air interface in the multi-service transport network to the microwave air interface according to the bandwidth requirement information in the dynamic bandwidth request, and/or enable the main control unit of the multi-service transport network to control, according to the bandwidth requirement information in the dynamic bandwidth request, transport bandwidth occupied by service data that is sent by other nodes of the multi-service transport network to the microwave air interface, so that the transport bandwidth occupied by the service data that is sent by other nodes of the multi-service transport network to the microwave air interface is not greater than the maximum service transport bandwidth available on the microwave air interface.

It should be noted that the main control unit of the multi-service transport network is an apparatus configured to allocate transport bandwidth to all nodes of the multi-service transport network.

103. Receive dynamic bandwidth allocation information sent by the main control unit of the multi-service transport network according to the dynamic bandwidth request, in which the dynamic bandwidth allocation information includes information about the transport bandwidth occupied by the microwave air interface in the multi-service transport network, so that the transport bandwidth occupied by the microwave air interface is adjusted and controlled according to the dynamic bandwidth information, and uplink service data is transported to the multi-service transport network according to the adjusted transport bandwidth.

104. Receive an uplink microwave signal transmitted by the microwave air interface, perform uplink service processing on the uplink microwave signal to obtain uplink service data, and transport the uplink service data to the multi-service transport network according to the dynamic bandwidth allocation information.

The method for microwave access to the multi-service transport network provided in the embodiment of the present invention may further include:
receiving downlink service data transported by the multi-service transport network to the microwave air interface, performing downlink service processing on the downlink service data to convert the downlink service data to a downlink microwave signal, and transmitting the downlink microwave signal.

During the downlink service processing, a modulation mode and/or transmit power that corresponds to the microwave air interface may be adjusted according to the received dynamic bandwidth allocation information.

In step 104, performing uplink service processing on the uplink microwave signal to obtain uplink service data and transporting the uplink service data to the multi-service transport network according to the dynamic bandwidth allocation information specifically include: receiving the uplink microwave signal transmitted by the microwave air interface, and processing the uplink microwave signal to obtain an uplink intermediate frequency signal; demodulating the intermediate frequency signal to obtain an uplink microwave frame; demultiplexing the uplink microwave frame to obtain the uplink service data; and transporting the uplink service data to the multi-service transport network according to the dynamic bandwidth allocation information.

The downlink service processing in the embodiment of the present invention specifically includes: converting the downlink service data to downlink data with a microwave frame structure; modulating the downlink data with the microwave frame structure to a downlink intermediate frequency signal; converting the downlink intermediate frequency signal to a downlink microwave signal and transmitting the microwave signal.

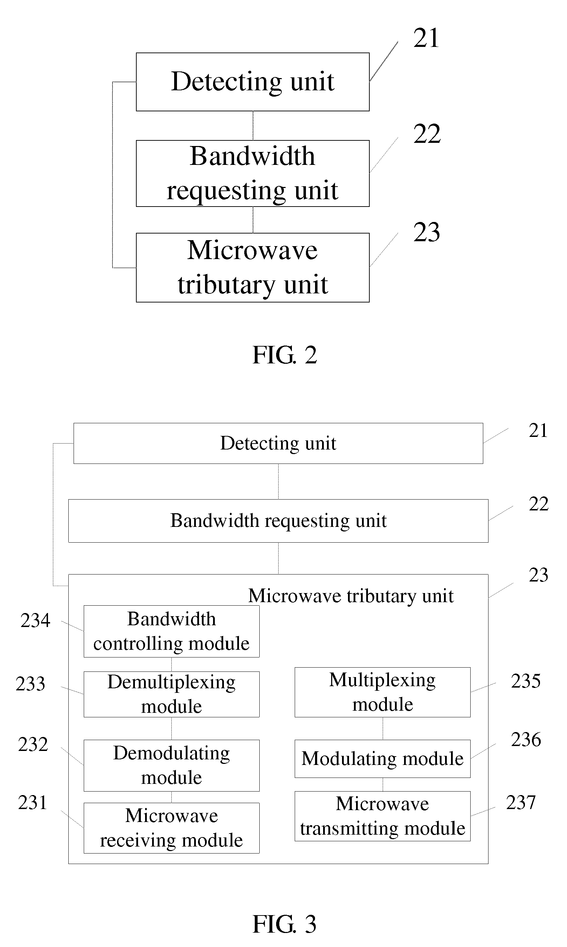

An embodiment of the present invention provides a multi-service transport device, as shown in FIG. 2. The device includes: a detecting unit 21, a bandwidth requesting unit 22, and a microwave tributary unit 23.

The detecting unit 21 is configured to detect whether a performance parameter and/or a status parameter of a microwave air interface changes. A functional module for processing microwave data transmitted by the microwave air interface, that is, a microwave tributary unit, is added to a multi-service transport device (GTH), and may communicate with other functional modules of the multi-service transport device, and the microwave air interface is a microwave physical link for transmitting microwave data. The performance parameter may be but not limited to a signal-to-noise ratio, a packet loss ratio, and a bit error rate; the status parameter may be but not limited to transmit power, receive power, a modulation/demodulation mode, a service type, and a service data volume.

When the detecting unit 21 detects that the performance parameter and/or the status parameter of the microwave air interface changes, the bandwidth requesting unit 22 is configured to generate a dynamic bandwidth request according to the changed performance parameter and/or the changed status parameter of the microwave air interface, and send the dynamic bandwidth request to a main control unit of a multi-service transport network. The dynamic bandwidth request includes bandwidth requirement information for the microwave air interface to transmit a service, which enables the main control unit of the multi-service transport network to allocate transport bandwidth occupied by the microwave air interface in the multi-service transport network to the microwave air interface according to the bandwidth requirement information in the dynamic bandwidth request, enables the main control unit of the multi-service transport network to control, according to the bandwidth requirement information in the dynamic bandwidth request, transport bandwidth occupied by service data that is sent by other nodes of the multi-service transport network to the microwave air interface, so that the transport bandwidth occupied by the service data that is sent by other nodes of the multi-service transport network to the microwave air interface is not greater than the maximum service transport bandwidth available on the microwave air interface.

The bandwidth requesting unit 22 is further configured to receive dynamic bandwidth allocation information sent by the main control unit of the multi-service transport network according to the dynamic bandwidth request, in which the dynamic bandwidth allocation information includes information about the transport bandwidth occupied by the microwave air interface in the multi-service transport network, so that the transport bandwidth occupied by the microwave air interface is adjusted and controlled according to the dynamic bandwidth information, and uplink service data is transported to the multi-service transport network according to the adjusted transport bandwidth.

The microwave tributary unit 23 is configured to receive an uplink microwave signal transmitted by the microwave air interface, perform uplink service processing on the uplink microwave signal to obtain uplink service data, and transport the uplink service data to the multi-service transport network according to the dynamic bandwidth allocation information.

The microwave tributary unit 23 is further configured to receive downlink service data transported by the multi-service transport network to the microwave air interface, perform downlink service processing on the downlink service data to convert the downlink service data to a downlink microwave signal, and transmit the downlink microwave signal. The microwave tributary unit 23 is further configured to perform downlink service processing on the downlink service data, and adjust a modulation mode and/or transmit power that corresponds to the microwave air interface according to the dynamic bandwidth allocation information received by the bandwidth requesting unit 22.

As shown in FIG. 3, the microwave tributary unit 23 includes: a microwave receiving module 231, a demodulating module 232, a demultiplexing module 233, and a bandwidth controlling module 234.

During the process in which the microwave tributary unit 23 receives the uplink microwave signal transmitted by the microwave air interface, performs uplink service processing on the uplink microwave signal to obtain uplink service data, and transports the uplink service data to the multi-service transport network according to the dynamic bandwidth allocation information, the microwave receiving module 231 is configured to receive the uplink microwave signal transmitted by the microwave air interface and process the uplink microwave signal to obtain an uplink intermediate frequency signal; the demodulating module 232 is configured to demodulate the intermediate frequency signal obtain by the microwave receiving module 231 to obtain an uplink microwave frame; the demultiplexing module 233 is configured to demultiplex the uplink microwave frame obtained by the demodulating module 232 to obtain the uplink service data; the bandwidth controlling module 234 is configured to transport the uplink service data obtained by the demultiplexing module 233 to the multi-service transport network according to the dynamic bandwidth allocation information.

As shown in FIG. 3, the microwave tributary unit 23 further includes: a multiplexing module 235, a modulating module 236, and a microwave transmitting module 237.

The multiplexing module 235 is configured to receive the downlink service data transported by the multi-service transport network to the microwave air interface, convert the downlink service data to downlink data with a microwave frame structure; the modulating module 236 is configured to modulate the downlink data with the microwave frame structure obtained by the multiplexing module 235 to a downlink intermediate frequency signal; the microwave transmitting module 237 is configured to convert the downlink intermediate frequency signal obtained by the modulating module 236 to a downlink microwave signal and transmit the downlink microwave signal.

The adjusting of the modulation mode and/or transmit power that corresponds to the microwave air interface according to the dynamic bandwidth allocation information when the microwave tributary unit 23 performs the downlink service processing on the downlink service data may specifically in the following ways: 1) According to the dynamic bandwidth allocation information received by the bandwidth requesting unit 22, the modulating module 236 adjusts its modulation mode, and modulates, according to the adjusted modulation mode, the downlink data with the microwave frame structure obtained by the multiplexing module 235 to the downlink intermediate frequency signal; 2) According to the dynamic bandwidth allocation information received by the bandwidth requesting unit 42, the microwave transmitting module 237 adjusts its transmit power, and transmits the downlink microwave signal according to the adjusted transmit power; 3) According to the dynamic bandwidth allocation information received by the bandwidth requesting unit 22, the modulating module 236 adjusts its modulation mode, and meanwhile, the microwave transmitting module 237 adjusts its transmit power.

In the embodiment of the present invention, the microwave tributary unit for processing data transmitted by the microwave air interface is added to the multi-service transport device. When the change on the performance parameter and/or the status parameter of the microwave air interface is detected, the dynamic bandwidth request is generated according to the changed performance parameter and/or the changed status parameter, and the dynamic bandwidth request is sent to the main control unit of the multi-service transport network. The main control unit of the multi-service transport network sends the dynamic bandwidth allocation information according to the dynamic bandwidth request, in which the dynamic bandwidth allocation information includes the information about the transport bandwidth occupied by the microwave air interface in the multi-service transport network. The microwave tributary unit performs the uplink service processing on the uplink microwave signal to obtain the uplink service data, and sends the uplink service data to the multi-service transport network according to the dynamic bandwidth allocation information. This implements real-time change of the transport bandwidth occupied by the microwave air interface in the multi-service transport network according to the volume of services transmitted by the microwave air interface, improves usage of bandwidth of the multi-service transport network to a certain degree, and improves availability of microwave transmission.

### Embodiment 2

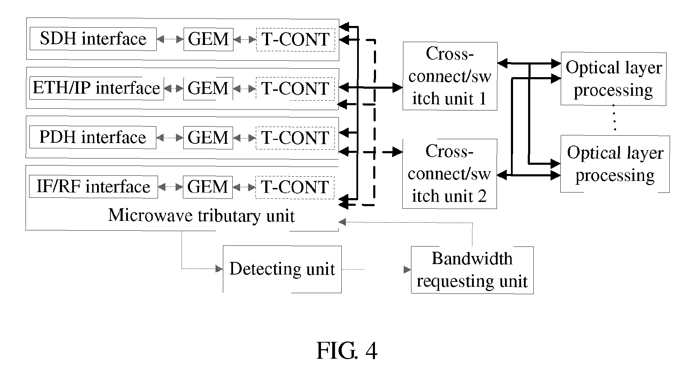

In this embodiment, the method for microwave access to the multi-service transport network (GTH) and the multi-service transport device are further described with reference to FIG. 4, FIG. 5, and FIG. 6.

The multi-service transport device provided in the embodiment of the present invention is added microwave tributary unit, as shown in FIG. 4, compared with an existing multi-service transport (GTH) device.

The GTH device has all types of tributary units, for example, a tributary unit of an SDH (Synchronous Digital Hierarchy, synchronous digital hierarchy) interface and a tributary unit of a PDH (Pleisochronous Digital Hierarchy, pleisochronous digital hierarchy) interface. All tributary units implement access of services of corresponding types to the multi-service transport network. As shown in FIG. 4, when tributary units of all types transmit services with other modules of the GTH device, service data encapsulated by using GEM (G-PON Encapsulation Method, G-PON (Gigabit-Capable Passive Optical Network, gigabit-capable passive optical network) encapsulation method) or data in T-CONT (Transmission Container, transmission container) format may be used, and the data that is actually used may be determined according to a cross-connect/switch unit of the GTH device.

For example, when the cross-connect/switch unit of the GTH device uses a GEM interface, the microwave tributary unit does not require a T-CONT processing unit; when the cross-connect/switch unit of the GTH device uses a T-CONT interface, the microwave tributary unit requires a T-CONT processing unit, so that the interfaces between all tributary units and the cross-connect/switch unit inside the GTH devices are consistent, facilitating flexible configuration of a cross-connect capacity.

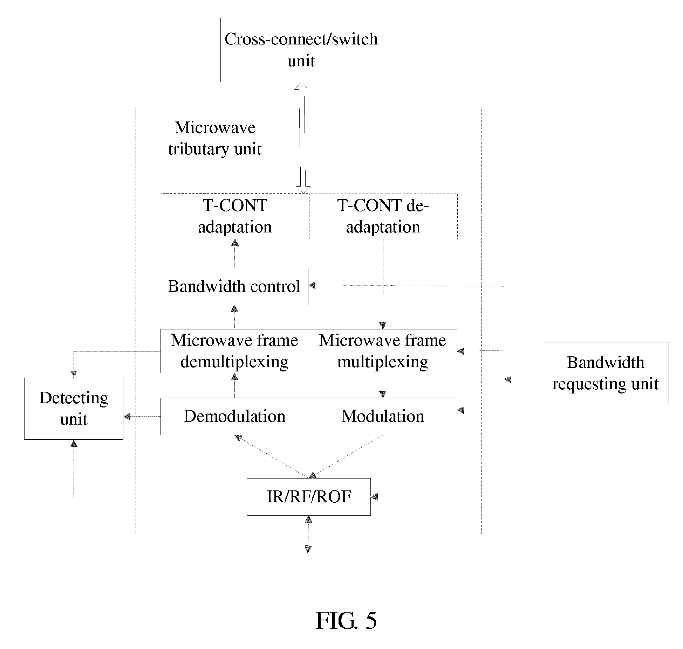

FIG. 5 shows a schematic structural diagram of the microwave tributary unit. The microwave tributary unit includes an IF/RF/ROF (Intermediate Frequency /Radio Frequency/Radio over Fiber, intermediate frequency/radio frequency/radio over fiber) module, a demodulating module, a microwave frame demultiplexing module, a bandwidth controlling module, a microwave multiplexing module, and a modulating module.

The IF/RF/ROF module, the demodulating module, the microwave demultiplexing module, and the bandwidth controlling module work together to perform uplink service processing on an uplink microwave signal transmitted by a microwave air interface, and transport, through the cross-connect/switch unit, uplink service data that is obtained through the uplink service processing to the multi-service transport network. The microwave frame multiplexing module, the modulating module, and the IF/RF/ROF module work together to perform downlink service processing on downlink service data transported by the multi-service transport network through the cross-connect/switch unit, to the microwave air interface, and transmit a downlink microwave signal that is obtained through the downlink service processing.

The IF/RF/ROF module has the processing functions of the intermediate frequency/radio frequency/radio over fiber transmission technology. In the uplink direction, the IF/RF/ROF module receives an uplink microwave signal, processes the received uplink microwave signal to obtain an intermediate frequency signal, and sends the intermediate frequency signal to the demodulating module for demodulation. A method for the IF/RF/ROF module to process the received uplink microwave signal to obtain an intermediate frequency signal may be a method in the prior art and is not restricted in the present invention.

In the uplink direction, the demodulation module is configured to receive the intermediate frequency signal sent by the IF/RF/ROF module, demodulate the received intermediate frequency signal to obtain an uplink microwave frame of all-digital signal, and send the uplink microwave frame of all-digital signal to the microwave frame demultiplexing unit.

In the uplink direction, the microwave frame demultiplexing module demultiplexes the uplink microwave frame of all-digital signal sent by the modulating module to obtain uplink service data, and sends the obtained uplink service data to the cross-connect/switch unit of the multi-service transport device. The cross-connect/switch unit transports the uplink service data to the multi-service transport network. Therefore, microwave access to the multi-service transport network is implemented. The microwave frame demultiplexing module demultiplexes the uplink microwave frame to obtain the uplink service data, in which the uplink service data may be uplink service data in GEM frame format or in T-CONT frame format. A format of the uplink service data depends on an encapsulation format used when a peer microwave device sends uplink microwave service data. If the peer microwave device sends the uplink microwave service data in GEM frame format, the uplink service data obtained after demultiplexing by the microwave frame demultiplexing module is in GEM frame format; if the peer microwave device sends the uplink microwave service data in T-CONT frame format, the uplink service data obtained after demultiplexing by the microwave frame demultiplexing module is in T-CONT frame format.

In the uplink direction, the bandwidth controlling module allocates bandwidth for all types of services according to bandwidth allocation information of all types of services that is sent by a main control unit of the multi-service transport network, and allocates corresponding bandwidth according to the volume of the uplink service data sent by the microwave frame demultiplexing module so that the uplink service data is sent to the multi-service transport network.

In the downlink direction, the microwave multiplexing module converts the downlink service data that is transported by the multi-service transport network to the microwave air interface to downlink data with a microwave frame structure, and sends the downlink data with the microwave frame structure to the modulating module.

In the downlink direction, the modulating module receives the downlink data with the microwave frame structure sent by the microwave frame multiplexing module, modulates the received downlink data to obtain an intermediate frequency signal, and sends the intermediate frequency signal to the IF/RF/ROF module for further processing.

In the downlink direction, the IF/RF/ROF module receives the intermediate frequency signal modulated by the modulating module, processes the intermediate frequency signal to obtain a downlink microwave signal, and transmits the downlink microwave signal through a microwave antenna connected to an external interface so that a peer microwave device can receive downlink service data sent by the multi-service transport network.

The method for microwave access to the multi-service transport network provided in the embodiment of the present invention is further described with reference to FIG. 4 and FIG. 5.

In the uplink direction, the microwave tributary unit receives the uplink microwave signal transmitted by the microwave air interface, and performs the uplink service processing to obtain the uplink service data. The uplink service processing specifically includes: The IF/RF/ROF module receives the uplink microwave signal transmitted by the microwave air interface, and processes the uplink microwave signal to obtain the intermediate frequency signal; the demodulating module demodulates the intermediate frequency signal to obtain the uplink microwave frame; the microwave frame demultiplexing module demultiplexes the uplink microwave frame to obtain the uplink service data; the bandwidth controlling module allocates corresponding bandwidth, according to the bandwidth allocation information of all types of services sent by the main control unit of the multi-service transport network, for the uplink service data obtained by the microwave demultiplexing module, so as to send the uplink service data to the multi-service transport network.

During the process in which the microwave tributary unit performs the uplink service processing on the received uplink microwave signal, the detecting unit can detect the performance parameter and/or the status parameter of the microwave air interface corresponding to the microwave tributary unit. The process may specifically be:

When receiving the uplink microwave signal sent by the peer microwave device, the IF/RF/ROF module can detect the receive power that corresponds to the microwave air interface; when demodulating the received uplink microwave signal, the demodulating module can detect corresponding parameters of the microwave air interface, including a modulation/demodulation mode, a bit error rate, and MSE (Mean Squared Error, mean square error). After performing microwave frame demultiplexing on the data obtained through demodulating, the microwave frame demultiplexing module obtains the service data transmitted by the microwave air interface; according to the service data, the microwave demultiplexing module can detect parameters including a service data volume, a service type, and a packet loss ratio.

When the above detected performance parameters and/or the status parameters meet one of the following conditions, generation of the dynamic bandwidth request is triggered and the dynamic bandwidth request is sent to the main control unit of the multi-service transport unit: 1) One or several of the above performance parameters change compared with pre-configured performance parameters, or a changed performance parameter exceeds a preset performance parameter threshold; 2) One or several of the above status parameters change compared with pre-configured performance parameters, or a changed status parameter exceeds a preset status parameter threshold; 3) An above status parameter and an above performance parameter change over a pre-configured status parameter and performance parameter.

The dynamic bandwidth request sent to the main control unit of the multi-service transport network includes the bandwidth requirement information for the microwave air interface to transmit a service, in which the bandwidth requirement information for the microwave air interface to transmit a service is computed according to the changed performance parameter and/or the changed status parameter. In microwave communications, bandwidth of a microwave air interface is pre-configured, and bandwidth of a microwave air interface is configured matching the performance parameter and the status parameter of the microwave air interface. By detecting the performance parameter and the status parameter of the microwave air interface, bandwidth information preconfigured matching the performance parameter and the status parameter can be queried, and the bandwidth requirement information for the microwave air interface to transmit a service is computed. For example, when the modulation mode that corresponds to the microwave air interface is 16 QAM modulation format, the pre-configured bandwidth of the microwave air interface is 100 M; when the modulation mode that corresponds to the microwave air interface is 64 QAM modulation format, the pre-configured bandwidth of the microwave air interface is 400 M. When detecting that the corresponding modulation mode that corresponds to the microwave air interface is 16 QAM modulation format, it indicates that the microwave service transmission bandwidth is 100 M, and that when the microwave transmission service accesses the multi-service transport network, the service occupies 100 M transport bandwidth in the multi-service transport network. The 100 M bandwidth requirement information is sent through the dynamic bandwidth request to the main control unit of the multi-service transport network for allocation of the transport bandwidth. A method of computing the bandwidth requirement information for the microwave air interface to transmit a service according to another performance parameter or another status parameter is similar to the method of computing the bandwidth requirement information according to the modulation mode. All such methods are prior art and therefore are not described again herein.

After receiving the dynamic bandwidth request, the main control unit of the multi-service transport network allocates the transport bandwidth occupied by the microwave air interface in the multi-service transport network to the microwave air interface according to the bandwidth requirement information, included in the dynamic bandwidth request, for the microwave air interface to transmit a service and sends the transport bandwidth information through the dynamic bandwidth allocation information. The main control unit of the multi-service transport network can also control, according to the bandwidth requirement information in the dynamic bandwidth request, transport bandwidth occupied by service data that is sent by other nodes of the multi-service transport network to the microwave air interface, so that the transport bandwidth used by the service data that is sent by other nodes of the multi-service transport network to the microwave air interface is not greater than the maximum service transport bandwidth available on the microwave air interface.

The bandwidth requesting unit receives the dynamic bandwidth allocation information sent by the main control unit of the multi-service transport network according to the dynamic bandwidth request, in which the dynamic bandwidth allocation information includes information about the transport bandwidth occupied by the microwave air interface in the multi-service transport network; the bandwidth allocating unit of the microwave tributary unit adjusts and controls the transport bandwidth used by the microwave air interface according to the dynamic bandwidth information received by the bandwidth requesting unit, and transports the uplink service data to the multi-service transport network according to the adjusted transport bandwidth.

The method for microwave access to the multi-service transport network provided in the embodiment of the present invention may further include:

In the downlink direction, the microwave tributary unit shown in FIG. 5 performs the downlink service processing on the downlink service data transported by the multi-service transport network to the microwave air interface, converts the downlink service data to the microwave signal, and transmits the microwave signal. Performing the downlink service data on the downlink service data to convert the downlink service data to the microwave signal, and transmitting the microwave signal may specifically include: The microwave frame multiplexing module receives the downlink service data transported by the multi-service transport network to the microwave air interface, and converts the downlink service data to the downlink data with the microwave frame structure; the modulating module modulates the downlink data with the microwave frame structure to the downlink intermediate frequency signal; the microwave transmitting module converts the downlink intermediate frequency signal obtained by the modulating module to the downlink microwave signal and transmits the downlink microwave signal.

When performing the downlink service processing on the downlink service data, the microwave tributary unit may also adjust the modulation mode and/or transmit power that corresponds to the microwave air interface according to the dynamic bandwidth allocation information received by the bandwidth requesting unit. The adjusting may be specifically in the following ways: 1) According to the dynamic bandwidth allocation information received by the bandwidth requesting unit, the modulating module adjusts the modulation mode used by itself, and modulates, according to the adjusted modulation mode, the downlink data with the microwave frame structure obtained by the multiplexing module to the downlink intermediate frequency signal; 2) According to the dynamic bandwidth allocation information received by the bandwidth requesting unit, the IF/RF/ROF module adjusts its transmit power, and transmits the downlink microwave signal according to the adjusted transmit power; 3) According to the dynamic bandwidth allocation information received by the bandwidth requesting unit, the modulating module adjusts the modulation mode used by itself, and meanwhile, the microwave transmitting module adjusts its transmit power.

Adjusting the modulation mode according to the dynamic bandwidth allocation information may use but not limited to the following ways: 1) When the transport bandwidth occupied by the microwave air interface and indicated in the dynamic bandwidth allocation information is greater than the pre-configured transport bandwidth or the allocated transport bandwidth, the modulation mode used by the modulating module is adjusted, and a high-order modulation mode can be used; for example, the original modulation mode used by the modulating module is a QPSK modulation mode, and the modulating module uses the 16 QAM modulation mode after adjustment to meet requirements for large-bandwidth transmission. 2) When the transport bandwidth occupied by the microwave air interface and indicated in the dynamic bandwidth allocation information is less than the pre-configured transport bandwidth or the allocated transport bandwidth, the modulation mode used by the modulating module is adjusted, and a high-order modulation mode can be used; for example, the original modulation mode used by the modulating module is the 16 QAM modulation mode, and the modulating module uses the QPSK modulation mode after adjustment to meet transmission bandwidth requirements, increase the capability of microwave transmission against the atrocious weather and availability of microwave air interface transmission.

Adjusting the transmit power according to the dynamic bandwidth allocation information may use but not limited to the following ways: 1) When the transport bandwidth occupied by the microwave air interface and indicated in the dynamic bandwidth allocation information is greater than the pre-configured transport bandwidth or the allocated transport bandwidth, the transmit power used by the IF/RF/ROF module for transmitting the downlink microwave signal is increased to increase link availability of the microwave air interface under the condition that the transmission bandwidth requirement is met. 2) When the transport bandwidth occupied by the microwave air interface and indicated in the dynamic bandwidth allocation information is less than the pre-configured transport bandwidth or the allocated transport bandwidth, the transmit power used by the IF/RF/ROF module for transmitting the downlink microwave signal is reduced to reduce interference on an adjacent microwave air interface under the condition that the transmission bandwidth requirement is met.

Adjusting the modulation mode and the transmit power at the same time according to the dynamic bandwidth allocation information may use but not limited to the following ways: 1) When the transport bandwidth occupied by the microwave air interface and indicated in the dynamic bandwidth allocation information is greater than the pre-configured transport bandwidth or the allocated transport bandwidth, the modulating module uses a high-order modulation mode and the IF/RF/ROF module increases the transmit power used for transmitting the downlink microwave signal to meet the transmission bandwidth requirement and increase link availability of the microwave air interface. 2) When the transport bandwidth occupied by the microwave air interface and indicated in the dynamic bandwidth allocation information is less than the pre-configured transport bandwidth or the allocated transport bandwidth, the modulating module uses a low-order modulation mode and the IF/RF/ROF module reduces the transmit power used for transmitting the downlink microwave signal to reduce interference on an adjacent microwave air interface under the condition that the transmission bandwidth requirement is met.

In the preceding description of the above embodiments, considering that the interface of the cross-connect/switch unit in the multi-service transport device is a GEM interface, the design of the microwave tributary unit does not include a T-CONT adaptation unit and a T-CONT de-adaptation unit. When the cross-connect/switch unit in the multi-service transport device is a T-CONT interface, the microwave tributary unit needs to include the T-CONT adaptation unit and the T-CONT de-adaptation unit, as shown in FIG. 5. The T-CONT adaptation unit adapts uplink service data in GEM frame format to uplink service data in T-CONT frame format and sends the adapted data to the cross-connect/switch unit. The T-CONT adaptation unit de-adapts uplink service data transported by the cross-connect/switch unit to the microwave air interface to uplink service data in GEM frame format.

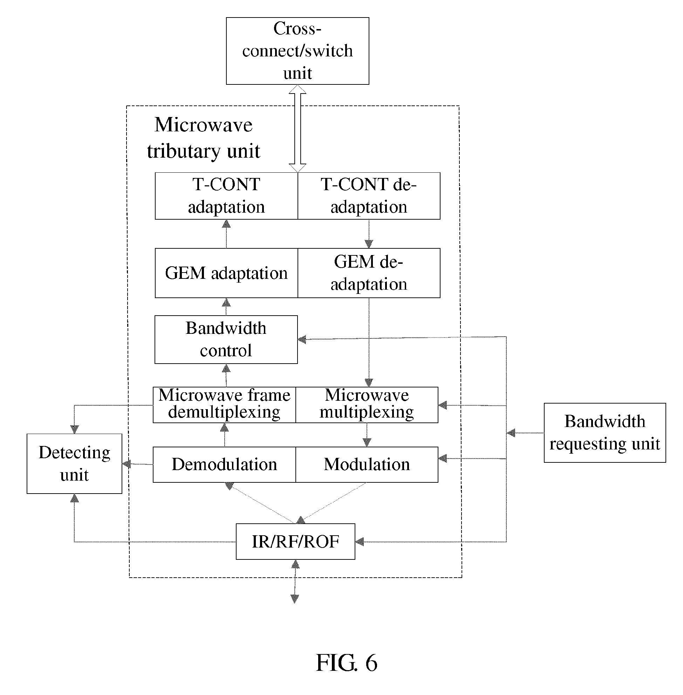

FIG. 6 shows another structure of a microwave tributary unit in the multi-service transport device in an embodiment of the present invention. The microwave tributary unit shown in FIG. 6 is added only a GEM adapting module and a GEM de-adapting module compared with the microwave tributary unit shown in FIG. 5. The microwave tributary unit shown in FIG. 6 is applicable to a scenario in which a microwave frame multiplexing/demultiplexing module of a peer microwave device transmits and receives service data without GEM encapsulation, such as service data of the PDH type and service data of the ETH type. The GEM adapting module encapsulates the uplink service data of types such as PDH and ETH obtained by the microwave frame multiplexing module to uplink service data in the GEM frame format; the GEM de-adapting module decapsulates downlink service data in the GEM frame format transported by the multi-service transport network or downlink service data in the GEM frame format obtained by the T-CONT de-adapting unit to downlink service data of types such as PDH and ETH. The functions of other modules are the same as the functions of corresponding modules shown in FIG. 5, and are not described again herein.

In the embodiment of the present invention, the microwave tributary unit for processing data transmitted by the microwave air interface is added to the multi-service transport device. When the change on the performance parameter and/or the status parameter of the microwave air interface is detected, the dynamic bandwidth request is generated according to the changed performance parameter and/or the changed status parameter, and the dynamic bandwidth request is sent to the main control unit of the multi-service transport network. The main control unit of the multi-service transport network sends the dynamic bandwidth allocation information according to the dynamic bandwidth request, in which the dynamic bandwidth allocation information includes the information about the transport bandwidth occupied by the microwave air interface in the multi-service transport network. The microwave tributary unit performs the uplink service processing on the uplink microwave signal to obtain the uplink service data, and sends the uplink service data to the multi-service transport network according to the dynamic bandwidth allocation information. This implements real-time change of the transport bandwidth occupied by the microwave air interface in the multi-service transport network according to the volume of services transmitted by the microwave air interface, improves usage of bandwidth of the multi-service transport network to a certain degree, and improves availability of microwave transmission.

Further, the microwave tributary unit works as a functional modular board of the GTH device and communicates with other functional modules of the GTH device, and therefore, the microwave tributary unit can be managed and controlled in a uniform manner as a part of the GTH device, facilitating service provisioning and fault location and reducing the maintenance and usage cost.

It is understandable to those skilled in the art that present invention can be implemented by the software and necessary universal hardware or completely by the hardware. In many situations, however, the former implementation is better. Based on such understanding, all or certain contributions made by the technical solutions provided in the present invention to the current technology can be performed by software. The software may be stored in a readable storage medium such as floppy disk, hard disk, and compact disk of a computer. The software includes several instructions used to instruct a computer (a personal computer, server, or network device) to implement methods provided in all embodiments. Detailed above are only the exemplary embodiments of the present invention. The invention, however, is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A microwave access method, comprising:
detecting whether a performance parameter and/or a status parameter of a microwave air interface changes; if the performance parameter and/or the status parameter changes, generating a dynamic bandwidth request according to the changed performance parameter and/or the changed status parameter, and sending the dynamic bandwidth request to a main control unit of a multi-service transport network, wherein the dynamic bandwidth request comprises bandwidth requirement information for the microwave interface to transmit a service;
receiving dynamic bandwidth allocation information sent by the main control unit according to the dynamic bandwidth request, wherein the dynamic bandwidth allocation information comprises information about transport bandwidth occupied by the microwave interface in the multi-service transport network; and
receiving an uplink microwave signal transmitted by the microwave air interface, performing uplink service processing on the uplink microwave signal to obtain uplink service data, and transporting the uplink service data to the multi-service transport network according to the dynamic bandwidth allocation information.

2. The method according to claim 1, further comprising:
receiving downlink service data transported by the multi-service transport network to the microwave air interface, performing downlink service processing on the downlink service data to convert the downlink service data to a downlink microwave signal, and transmitting the downlink microwave signal.

3. The method according to claim 2, further comprising:
adjusting a modulation mode and/or transmit power that corresponds to the microwave air interface according to the dynamic allocation information when performing the downlink service processing on the downlink service data.

4. The method according to any one of claims 1-3, wherein the receiving an uplink microwave signal transmitted by the microwave air interface, performing uplink service processing on the uplink microwave signal to obtain uplink service data, and transporting the uplink service data to the multi-service transport network according to the dynamic bandwidth allocation information specifically comprises:
receiving the uplink microwave signal transmitted by the microwave air interface, and processing the uplink microwave signal to obtain an uplink intermediate frequency signal;
demodulating the intermediate frequency signal to obtain an uplink microwave frame;
demultiplexing the uplink microwave frame to obtain the uplink service data; and
transporting the uplink service data to the multi-service transport network according to the dynamic bandwidth allocation information.

5. The method according to claim 2 or 3, wherein the performing downlink service processing on the downlink service data to convert the downlink service data to a downlink microwave signal and transmitting the downlink microwave signal specifically comprises:
converting the downlink service data to downlink data with a microwave frame structure;
modulating the downlink data with the microwave frame structure to a downlink intermediate frequency signal; and
converting the downlink intermediate frequency signal to the downlink microwave signal and transmitting the downlink microwave signal.

6. A multi-service transport device, comprising:
a detecting unit, configured to detect whether a performance parameter and/or a status parameter of a microwave interface changes;
a bandwidth requesting unit, configured to generate a dynamic bandwidth request according to the changed performance parameter and/or the changed status parameter, and send the dynamic bandwidth request to a main control unit of a multi-service transport network, wherein the dynamic bandwidth request comprises bandwidth requirement information of a transmission service of the microwave interface; and further configured to receive dynamic bandwidth allocation information sent by the main control unit of the multi-service transport network according to the dynamic bandwidth request, wherein the dynamic bandwidth allocation information comprises transport bandwidth information occupied by the microwave interface in the multi-service transport network; and
a microwave tributary unit, configured to receive an uplink microwave signal transmitted by the microwave interface, perform uplink service processing on the uplink microwave signal to obtain uplink service data, and transport the uplink service data to the multi-service transport network according to the dynamic bandwidth allocation information.

7. The device according to claim 6, wherein, the microwave tributary unit is further configured to receive downlink service data transported by the multi-service transport network to the microwave air interface, perform downlink service processing on the downlink service data to convert the downlink service data to a downlink microwave signal, and transmit the downlink microwave signal.

8. The device according to claim 7, wherein the microwave tributary unit is further configured to adjust a modulation mode and/or transmit power that corresponds to the microwave air interface according to the dynamic bandwidth allocation information when performing the downlink service processing on the downlink service data.

9. The device according to any one of claims 6-8, wherein the microwave tributary unit comprises:
a microwave receiving module, configured to receive the uplink microwave signal transmitted by the microwave air interface, and processing the uplink microwave signal to obtain an uplink intermediate frequency signal;
a demodulating module, configured to demodulate the intermediate frequency signal to obtain an uplink microwave frame;
a demultiplexing module, configured to demultiplex the uplink microwave frame to obtain the uplink service data; and
a bandwidth controlling module, configured to transport the uplink service data to the multi-service transport network according to the dynamic bandwidth allocation information.

10. The device according to claims 7 or 8, wherein the microwave tributary unit further comprises:
a multiplexing module, configured to receive the downlink service data transported by the multi-service transport network to the microwave air interface, and convert the downlink service data to the downlink data with a microwave frame structure;
a modulating module, configured to modulate the downlink data with the microwave frame structure to a downlink intermediate frequency signal; and
a microwave transmitting module, further configured to convert the downlink intermediate frequency signal to the downlink microwave signal and transmitting the downlink microwave signal.
